# EUROPÄISCHE PATENTSCHRIFT

(11) **EP 1 421 437 B1**
(45) Veröffentlichungstag und Bekanntmachung des Hinweises auf die Patenterteilung: **19.01.2005**
(21) Anmeldenummer: 02797594.5
(22) Anmeldetag: 19.08.2002
(51) Int. Cl.: G02F 1/153, E06B 3/677

(54) **SYSTEM MIT VERGLASUNGSELEMENT UND GASVERSORGUNGSVORRICHTUNG**
SYSTEM COMPRISING A GLAZING ELEMENT AND A GAS SUPPLY DEVICE
SYSTEME COMPORTANT UN ELEMENT DE VITRIFICATION ET DISPOSITIF D'ALIMENTATION EN GAZ

(30) Priorität: 28.08.2001 DE 10141897
(43) Veröffentlichungstag der Anmeldung: 26.05.2004
(73) Patentinhaber: INTERPANE Entwicklungs- und Beratungsgesellschaft mbH & Co. KG, D-37697 Lauenförde (DE)
(72) Erfinder: GRAF, Wolfgang, 79427 Eschbach (DE); ROX, Rainer, 37688 Beverungen (DE)
(74) Vertreter: Körfer, Thomas, Dipl.-Phys.
(86) Internationale Anmeldenummer: PCT/EP2002/009254
(87) Internationale Veröffentlichungsnummer: WO 2003/021344

(56) Entgegenhaltungen:
- WO-A-98/06000
- US-A- 5 096 549
- US-A- 5 864 994

## Beschreibung

Die Erfindung betrifft ein System mit Verglasungselement und Gasversorgungsvorrichtung.

Aus der DE 44 40 572 C2 ist ein Verglasungselement mit variabler Transmission bekannt. Dieses Verglasungselement umfaßt wenigstens zwei Scheiben, die einen mit Gas gefüllten Zwischenraum einschließen. Das Gas enthält unter anderem Wasserstoff und Sauerstoff, wobei der Gehalt von Wasserstoff und Sauerstoff in der Gasatmosphäre variabel eingestellt werden kann. Auf einer der dem Zwischenraum zugewandten Fläche einer der beiden Scheiben ist eine reaktionsfähige Schicht und darüber eine Katalysatorschicht aufgebracht. Die reaktionsfähige Schicht und die Katalysatorschicht wirken derart zusammen, daß die reaktionsfähige Schicht in Abhängigkeit von dem Wasserstoff- und Sauerstoffgehalt in der Gasatmosphäre reversibel ihre optischen Eigenschaften ändern.

Der vorgenannte Schichtaufbau aus reaktionsfähiger Schicht und Katalysatorschicht wird auch als gasochrome Schicht bzw. Beschichtung bezeichnet.

Die Gasversorgung eines unter Verwendung einer gasochromen Schicht hergestellten Verglasungselementes, beispielsweise eine Doppelverglasung, erfordert Wasserstoff und Sauerstoff in geringen Mengen bzw. geringen Konzentrationen, die vorzugsweise unterhalb der Brennbarkeitsgrenze liegen. Die reaktiven Gase, beispielsweise Wasserstoff und Sauerstoff, werden mit inertem Gas, wie beispielsweise Stickstoff, Helium, Neon, Argon, Krypton oder Xenon, verdünnt.

Während des Färbungs- bzw. Entfärbungsvorganges der gasochromen Schicht entsteht aus Wasserstoff und Sauerstoff wieder Wasser, welches aus der von den zwei Scheiben eingeschlossenen Gasatmosphäre entfernt werden muß, da es anderenfalls zu einer Kondensation von Wasser kommen kann. Eine Kondensation von Wasser in einem Verglasungselement, beispielsweise einer Doppelverglasung, ist unerwünscht, da es zu einer Beeinträchtigung der Durchsicht und insgesamt des optischen Erscheinungsbildes und/oder einer Beeinträchtigung der gasochromen Schicht führt.

Eine Versorgung der Gasatmosphäre in dem Zwischenraum des Verglasungselementes mit Wasserstoff und Sauerstoff könnte prinzipiell durch aus Gasflaschen bereitgestelltes Gas, durch Sauerstoff aus der Umgebungsluft, durch Wasserstoff aus Metallhydridspeichern oder durch Wasserstoff und Sauerstoff, die durch eine Elektrolyse bereitgestellt werden, erfolgen.

Die Versorgung mit Gas aus Gasflaschen erfordert nachteilig eine aufwendige Wartung, da die Flaschen in regelmäßigen Abständen gewechselt werden müssen. Beispielsweise könnte verdünntes Gas, z.B. 2 % Wasserstoff in Stickstoff, verwendet werden, da diese Mischung nicht brennbar ist. Nachteilig ist jedoch, daß in diesem Fall der Verbrauch groß ist und die Gasflasche(n) sehr oft gewechselt werden muß.

Wenn man höher konzentrierte oder reine Gase verwendet, die nachfolgend mit Stickstoff gemischt werden, so muß zum einen die Gasflasche und müssen andererseits die Gaszufuhrleitungen entsprechend explosionsgeschützt ausgelegt sein. Dies ist aufwendig und mithin kostenintensiv.

Bei Verwendung von Sauerstoff aus der Umgebungsluft gelangen zwangsläufig gasförmige und/oder partikuläre Verunreinigungen in das System, die auf Dauer zu Beeinträchtigungen, beispielsweise in Form einer Verschmutzung des Systems, führen.

Die Versorgung mit Wasserstoff könnte grundsätzlich auch unter Verwendung von Hydridspeichern erfolgen. Jedoch führt dies grundsätzlich zu den gleichen Schwierigkeiten wie bei der Verwendung einer Gasflasche. Grundsätzlich wäre ein Metallhydridsystem zur Zuführung und Abführung von Wasserstoff gut geeignet. Durch Aufheizen des Metallhydridsystems könnte Wasserstoff ausgetrieben und durch Abkühlen Wasserstoff wieder in das Metallhydridsystem eingelagert werden. Die ausschließliche Bereitstellung von Wasserstoff reicht jedoch für den Schaltbetrieb eines Verglasungselementes unter Verwendung einer gasochromen Schicht nicht aus. Weiterhin ist zur Entfärbung einer gasochromen Schicht auch Sauerstoff notwendig.

Bei Verwendung von herkömmlichen Elektrolysezellen, die überwiegend im alkalischen Bereich arbeiten, besteht die Gefahr, daß die gasochrome Schicht von alkalischen Komponenten angegriffen wird. Diese Gefahr ist insbesondere bei einer WO₃-Schicht groß. Weiterhin kann es zu einer Kondensation von Wasser in dem Verglasungselement kommen. Dies kann insbesondere dann auftreten, wenn es zu einer Erwärmung des Verglasungselementes und des Gases, beispielsweise bei intensiver Sonneneinstrahlung im gefärbten Zustand gekommen ist, und einem nachfolgenden Abkühlen des Verglasungselementes, beispielsweise nach Sonnenuntergang. Hierdurch kann die relative Feuchte in dem Verglasungselement schnell auf 100 % ansteigen, worauf eine Kondensation von Wasser einsetzt.

Ein weiterer Nachteil herkömmlicher Elektrolysevorrichtungen ist es, daß Wasser verbraucht und zu der Elektrolysevorrichtung nicht wieder zurückgeführt wird. Insofern ist es erforderlich, daß Wasser von außen dem System zugeführt wird, was einen erhöhten Wartungsaufwand bedeutet.

Theoretisch ist es denkbar, daß bei Verwendung von herkömmlichen Elektrolysezellen eine Trocknung des Gases erfolgt. Beispielsweise könnten Trocknungsmittel verwendet werden, die jedoch von Zeit zu Zeit ausgetauscht oder erwärmt werden müssen, um das gebundene Wasser auszutreiben. Weiterhin könnte eine Abkühlung des Gases unter den Taupunkt erfolgen. Auch ist eine Kompression des Gases über eine semipermeable Membran, die lediglich für Wasser durchlässig ist, denkbar.

Die vorgenannten Trocknungsverfahren erfordern jedoch entweder einen hohen Aufwand an Gerät, Platzbedarf, Installation und/oder Wartung. Weiterhin müssen bei diesen theoretisch denkbaren Lösungsansätzen das Versorgungsgerät zur Versorgung großer Flächen von Verglasungselementen entsprechend unterschiedlich ausgelegt sein. Das heißt, es müssen für verschieden große Verglasungselemente, beispielsweise Fensterflächen, entsprechend ausgelegte Versorgungsgeräte bereitgestellt werden.

Aufgabe der vorliegenden Erfindung ist es, ein System bereitzustellen, bei dem ein eine gasochrome Schicht aufweisendes Verglasungselement, beispielsweise für die Gebäudeverglasung oder für Fensterelemente in Fahr- oder Flugzeugen oder Schiffen, bereitzustellen, bei denen die Zusammensetzung der Gasatmosphäre auf einfache Art und Weise zuverlässig geregelt werden kann, und ein System bereitzustellen, bei dem der Anteil an Feuchtigkeit in der Gasatmosphäre begrenzt werden kann.

Die der Erfindung zugrundeliegende Aufgabe wird durch ein System mit den Merkmalen des Anspruchs 1 gelöst.

Bevorzugte Weiterbildungen sind in den Unteransprüchen angegeben.

Das erfindungsgemäße System mit Verglasungselement und Gasversorgungsvorrichtung kann insbesondere im Bereich der Gebäudeverglasung oder für Fensterelemente für Fahr- oder Flugzeuge oder Schiffe verwendet werden. Im Bereich der Gebäudeverglasung kann das Verglasungselement als Fenstersystem, das zwei, drei oder mehr Scheiben umfaßt, ausgebildet sein.

Die Substrate, beispielsweise Scheiben aus Glas oder transparentem Polymermaterial, beispielsweise Polymethacrylat oder Polycarbonat, eines Verglasungselementes weisen auf wenigstens einer Fläche, die dem Zwischenraum zugewandt ist, eine Beschichtung, deren physikalischen Eigenschaften in Abhängigkeit von der Zusammensetzung des Gases änderbar sind, auf.

Diese Beschichtung kann aus mehreren Schichten aufgebaut sein. Beispielsweise kann direkt auf dem Substrat eine reaktionsfähige Schicht aufgebracht sein und auf dieser reaktionsfähigen Schicht kann eine Katalysatorschicht aufgebracht sein.

Die reaktionsfähige Schicht und die Katalysatorschicht wirken zusammen, indem in Abhängigkeit der Zusammensetzung eines Gases sich deren physikalischen Eigenschaften, insbesondere die optischen und/oder elektrischen Eigenschaften, ändern.

Als reaktionsfähige Schicht kann beispielsweise eine sogenannte elektrochrome Schicht verwendet werden. Weiterhin kann als reaktionsfähige Schicht auch eine Metallhydridschicht verwendet werden.

Unter einer elektrochromen Schicht wird eine Schicht verstanden, die unter Einlagerung von positiven Ionen, wie beispielsweise Wasserstoffionen, und/oder Elektronen reversibel ihre physikalischen Eigenschaften, insbesondere ihre optischen Eigenschaften wie beispielsweise die Farbe der Schicht, ändern.

Eine Änderung der physikalischen Eigenschaften, insbesondere der optischen Eigenschaften, kann auch durch eine Reaktion von Oxiden mit Wasserstoff unter Bildung von Wasser und Sauerstofffehlstellen in der Schicht erfolgen. Eine elektrochrome Schicht kann Metalloxide wie beispielsweise Manganoxid, Kobaltoxid, Wolframoxid, Molybdänoxid, Titanoxid, Chromoxid, Vanadiumoxid, Ceroxid, Iridiumoxid, Nioboxid, Nickeloxid oder Mischungen oder Verbindungen davon umfassen.

Weiterhin können auch elektrochrome Polymere, wie beispielsweise Polythiophene, Polyanilin, Polypyrrol oder Mischungen davon verwendet werden.

Die elektrochrome Schicht oder elektrochromen Schichten können eine Schichtdicke in einem Bereich von etwa 100 nm bis etwa 1000 nm, bevorzugt etwa 200 nm bis etwa 600 nm, aufweisen.

Der Aufbau aus einer elektrochromen Schicht und Katalysatorschicht wird auch als gasochrome Schicht oder Beschichtung bezeichnet. Entsprechend werden unter Verwendung von einer oder mehreren gasochromen Schichten hergestellte Verglasungselemente als gasochrome Verglasungselemente, beispielsweise als gasochrome Fenster, bezeichnet.

Die Katalysatorschicht beschleunigt die Reaktionsgeschwindigkeit der an bzw. in der elektrochromen Schicht stattfindenden Reaktion.

Als Katalysatorschicht kann auf der elektrochromen Schicht eine dünne Schicht aus beispielsweise Platin, Iridium, Palladium, Rhodium, Osmium, Rhenium, Nickel und/oder Ruthenium aufgebracht sein. Die Katalyatorschicht kann eine Schichtdicke von etwa 0,5 nm bis etwa 10 nm, bevorzugt von 1 nm bis etwa 3 nm, aufweisen.

Die Katalysatorschicht muß jedoch nicht als separate Schicht aufgebracht sein, sondern der Katalysator bzw. die Katalysatoren können auch als Beimengung in der elektrochromen Schicht enhalten sein.

Als reaktionsfähige Schicht kann auch eine Schicht bzw. können mehrere Schichten aus Metallhydrid(en) verwendet werden. Diese Metallhydridschichten können beispielsweise ihre optische Eigenschaften bei Einlagerung bzw. Auslagerung von Wasserstoff in die Schicht von spiegelnd zu absorbierend ändern. Hierfür eignen sich insbesondere Metallhydride von seltenen Erden und von Übergangsmetalloxiden. Beispielsweise können die Metallhydride aus der Gruppe ausgewählt werden, die aus La_{1-z}Mg_{z}Hₓ, Gd_{1-Z}Mg_{z}Hₓ, Y_{1-Z}Mg_{z}Hₓ. YH_{b}, LaH_{b}, SmH_{b}, NiMg₂Hₓ, CoMg₂Hₓ und Mischungen davon besteht, wobei
z Werte in einem Bereich von 0 bis kleiner 1,
x Werte in einem Bereich von 0 bis 5 und
b Werte in einem Bereich von 0 bis 3 annehmen kann.

Die Metallhydridschichten können eine Schichtdicke in einem Bereich von etwa 10 nm bis etwa 500 nm, bevorzugt von etwa 20 nm bis 50 nm, aufweisen.

Auch auf die Metallhydridschicht(en) kann zur Beschleunigung der Reaktionsgeschwindigkeit der an bzw. in der Metallhydridschicht ablaufenden Reaktion eine Katalysatorschicht aufgebracht sein. Als Katalysatorschicht kann auf der Metallhydridschicht eine dünne Schicht aus beispielsweise Platin, Iridium, Palladium, Rhodium, Osmium, Rhenium, und/oder Ruthenium aufgebracht sein. Die Katalysatorschicht muß nicht als separate Schicht aufgebracht sein, sondern der Katalysator bzw. die Katalysatoren können auch als Beimengung in der Metallhydridschicht enhalten sein.

Die Katalysatorschicht kann, wenn sie als separate Schicht auf der Metallhydridschicht aufgebracht ist, äußerst vorteilhaft gleichzeitig auch als Schutzschicht für die teilweise gegenüber Sauerstoff und/oder Wasser empfindlichen Metallhydridschichten wirken.

Die Schichtdicke der Katalysatorschicht kann in einem Bereich von etwa 0,5 nm bis etwa 50 nm, bevorzugt 5 nm bis etwa 30 nm, liegen, sofern die Katalysatorschicht gleichzeitig auch als Schutzschicht wirken soll. Wenn die Katalysatorschicht nicht auch als Schutzschicht wirken soll, kann die Schichtdicke weiter verringert werden. Gemäß einer bevorzugten Ausführungsform kann die Katalysatorschicht in diesem Fall eine Schichtdicke von beispielsweise etwa 1 nm bis etwa 3 nm aufweisen.

Die reaktionsfähige Schicht und die Katalysatorschicht wirken so zusammen, daß die reaktionsfähige Schicht in Abhängigkeit von der Zusammensetzung des Gases bzw. der Gasatmosphäre reversibel ihre physikalischen Eigenschaften, bevorzugt ihre optischen Eigenschaften, beispielsweise die Färbung und damit ihre Transmission und/oder Reflexion, ändern.

Hierbei können sich beispielsweise auch die elektrischen Eigenschaften ändern. Beispielsweise steigt bei Wolframoxid die Leitfähigkeit um Größenordnungen, wenn sich die Zusammensetzung des Gases, die in Kontakt mit der elektrochromen Schicht und der Katalysatorschicht steht, ändert.

Entsprechend ändert sich die elektrische Leitfähigkeit bei Metall-Isolatorübergängen der Metallhydride.

Als Gas bzw. Gasmischung, das bzw. die mit der bzw. den reaktionsfähigen Schicht (en) in dem Verglasungselement reagiert und in der Gasversorgungseinrichtung erzeugbar ist, wird ein oxidierendes und ein reduzierendes Gas bzw. eine oxidierende und eine reduzierende Gasmischung verwendet. Beispielsweise können als Gas die Halogene Fluor, Chlor, Brom, Jod oder Mischungen davon verwendet werden. Gemäß einer bevorzugten Weiterbildung der Erfindung werden als Gas Wasserstoff und Sauerstoff verwendet. Diese Gase bzw. diese Gasmischungen können mit weiteren Gasen, die bevorzugt mit den reaktionsfähigen Schichten nicht reagieren (Inertgase), verdünnt sein.

Durch Mischung der in der Gasversorgungseinrichtung erzeugten Gase mit den im System befindlichen Inertgasen kann die Reaktivgaskonzentration im Gesamtsystem beeinflußt werden. Bevorzugt werden Konzentrationen unter 5 %, besonders bevorzugt unter 3 % eingestellt.

Äußerst bevorzugt enthält die Gasatmosphäre, die in dem von wenigstens zwei Substraten eingeschlossenen Zwischenraum angeordnet ist, Wasserstoff und Sauerstoff in geringen Mengen und geringen Konzentrationen, die vorzugsweise unterhalb der Brennbarkeitsgrenze liegen. Insbesondere bei Verwendung einer WO₃- oder MoO₃-Schicht oder einer W_{1-y}M_{oy}O₃-Mischoxid-Schicht (0 ≤ y ≤ 1, bevorzugt 0 < y < 0,4, besonders bevorzugt 0 < y < 0,25) mit einer dünnen Katalysatorschicht, beispielsweise aus Platin, Rhodium und/oder Iridium, kommt es in Abhängigkeit der Wasserstoff- bzw. Sauerstoffkonzentration zu einem Einfärbungs- bzw. Entfärbungsprozeß des beschichteten Substrates.

Zur Regelung des Einfärbungs- bzw. Eindunkelungs- und Entfärbungsprozesses wird beispielsweise bei Verwendung einer WO₃-Schich Wasserstoff bzw. Sauerstoff bereitgestellt. Die Konzentration von Wasserstoff bzw. Sauerstoff liegt in der Regel unterhalb von 3 %, bezogen auf das Volumen der Gaszusammensetzung, und somit unterhalb der Brennbarkeitsgrenze. Als Trägergas zur Füllung des Zwischenraumes kann jedes inerte Gas bzw. jede inerte Gasmischung ,. verwendet werden. Beispielsweise können Stickstoff und/oder Edelgase, wie z.B. Helium, Neon, Argon, Krypton, Xenon, etc. oder Mischungen davon verwendet werden.

Bei dem erfindungsgemäßen System werden nur geringe Mengen an Wasserstoff und Sauerstoff benötigt. In der Regel reichen pro Schaltvorgang etwa 50 ml reines Gas pro Quadratmeter Substratfläche aus. Insofern werden nur geringe Gaserzeugungsraten benötigt. Beispielsweise sind dies bei einer Schaltzeit von 1 min und 60 ml Gas 1 ml Gas/Sekunde für 1 m² Substratfläche.

Entsprechend ergeben sich für 5 Minuten 0,2 ml Gas/Sekunde, für 10 Minuten 0,1 ml Gas/Sekunde und für 10 Sekunden 6 ml Gas/Sekunde. Bei kleineren Substratflächen ist der benötigte Gasverbrauch entsprechend geringer, d.h. beispielsweise bei 0,1 m² und 60 Sekunden Schaltzeit etwa 0,1 ml Gas/Sekunde, bei 0,01 m² entsprechend 0,01 ml Gas/Sekunde oder für 10 m² und 60 Sekunden Schaltzeit 10 ml Gas/Sekunde. Andere Werte für Schaltzeiten, Substratflächen und/oder Gaserzeugungsraten.lassen sich entsprechend berechnen.

Bei diesen niedrigen Gaserzeugungsraten ist der Energieverbrauch der Gasversorgungsvorrichtung, d.h. der Energieverbrauch für die Elektrolyse zur Erzeugung von Gas von untergeordneter Bedeutung.

Mit dem erfindungsgemäßen System können ohne weiteres 25.000 Zyklen mit jeweils 50 ml produziertem Gas pro 1 m², d.h. insgesamt 1250 1 Gas/m² bereitgestellt werden. In diesem Fall beträgt die Betriebszeit beispielsweise 25.000 x 2 min, d.h. insgesamt 35 Tage. Selbstverständlich können auch längere Betriebszeiten erhalten bzw. größere Mengen an erzeugtem Gas bereitgestellt werden.

Das erfindungsgemäße System weist mithin äußerst vorteilhaft eine außerordentliche Langzeitstabilität auf. Das erfindungsgemäße System eignet sich somit hervorragend für die Verwendung im Gebäudebereich, wo die Standzeiten etwa 25 Jahre betragen.

Weiterhin ist es möglich, das erfindungsgemäße System kompakt und klein zu konstruieren. Mithin ist das erfindungsgemäße System leicht in die Fassade eines Gebäudes, eines Fahrzeuges, Flugzeuges oder Schiffes zu integrieren.

In dem erfindungsgemäßen System sind Mittel zur Beeinflussung des Feuchtigkeitsgehaltes des Gases angeordnet. Hierdurch kann eine Beschränkung des Feuchtigkeitsgehaltes des Gases erreicht werden und die Kondensation von Feuchtigkeit in dem zwischen den Substraten gebildeten Zwischenraum vermieden werden.

Ebenso kann die Feuchtigkeit auch gegenüber zu niedrigen Feuchtigkeitsgehalten beschränkt werden, wenn dies erwünscht ist.

Äußerst bevorzugt sind diese Mittel zur Beeinflussung des Feuchtigkeitsgehaltes des Gases in der Gasversorgungsvorrichtung angeordnet. Weiter bevorzugt sind diese Mittel in dem Elektrolyten der Elektrolysevorrichtung angeordnet.

Gemäß einer bevorzugten Ausführungsform können diese Mittel ein Zusatz oder mehrere Zusätze zu dem Elektrolyten sein, beispielsweise Salze, Säuren und/oder Laugen. Die in dem Gas enthaltene Feuchtigkeit wird durch diese Feuchtigkeit entziehenden Zusätze in dem Elektrolyten aus dem Gas in den Elektrolyten überführt. Somit wird eine Trocknung des Gases und eine Rückführung von Wasser aus dem Gas in die Elektrolysevorrichtung, nämlich den Elektrolyten, bewirkt. Das Ausmaß der Trocknung des Gases wird durch die Konzentration und die Art der Zusätze in dem Elektrolyten bestimmt.

Auf diese Weise wird dem System über den in dem System bevorzugt zirkulierenden Gasstrom die Feuchtigkeit in einem gewünschten Ausmaß entzogen. Das heißt, bei dem erfindungsgemäßen System kommt es zu keiner Kondensation von Wasser in dem Verglasungselement. Weiterhin wird die Feuchtigkeit bevorzugt in den Elektrolyten überführt, d.h. es wird im Hinblick auf die Feuchtigkeit ein in sich stabiles Kreislaufsystem bereitgestellt.

Äußerst bevorzugt werden Salzsäure, Schwefelsäure, Phosphorsäure, NaCl, K₃PO₄, NaOH, KOH und Mischungen davon dem Elektrolyten zugesetzt.

Nachfolgend wird die Erfindung unter Bezug auf die Fig. 1 bis Fig. 3 weiter veranschaulicht.

In Fig. 1 bis 3 werden beispielhafte Ausführungsformen dargestellt, die keine Begrenzung des Schutzumfanges darstellen.
- Fig. 1: zeigt eine schematische Darstellung einer beispielhaften Ausführungsform des erfindungsgemäßen Systems.
- Fig. 2a: zeigt eine beispielhafte Ausführungsform einer Elektrolyseeinrichtung, die in dem erfindungsgemäßen System verwendet werden kann.
- Fig. 2b: zeigt eine weitere beispielhafte Ausführungsform einer Elektrolyseeinrichtung, die in dem erfindungsgemäßen System verwendet werden kann.
- Fig. 3: zeigt eine weitere beispielhafte Ausführungsform einer Elektrolyseeinrichtung, die im erfindungsgemäßen System verwendet werden kann.

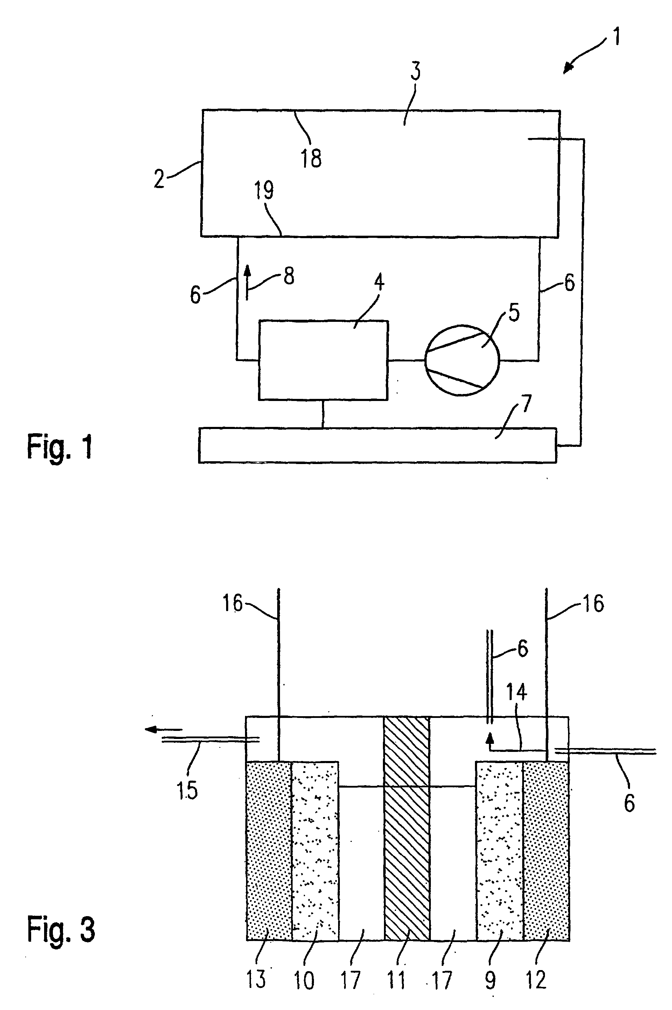

Fig. 1 zeigt eine beispielhafte Ausführungsform eines erfindungsgemäßen Systems 1. Ein doppelverglastes Fenster (Verglasungselement 2) mit einem Zwischenraum 3 ist mit einer Gasversorgungsvorrichtung 4 und einer Pumpe 5 in einem geschlossenen Kreislauf 6 angeordnet. Die Scheiben 18 und 19 des Doppelfensters 2 sind jeweils auf der dem Zwischenraum 3 zugewandten Fläche mit einer gasochromen Beschichtung (nicht gezeigt) versehen. Die gaschrome Beschichtung kann aber auch nur auf der dem Zwischenraum 3 zugewandten Fläche einer der Scheiben 18 oder 19 aufgebracht sein. Mit dem Fenster (Verglasungselement 2), der Gasversorgungsvorrichtung 4 und der Pumpe 5 ist eine Regelungseinheit 7 verbunden. Über die Regelungseinheit 7 erfolgt auch die elektrische Spannungsversorgung der Gasversorgungsvorrichtung 4 und der Pumpe 5. Der Pfeil gibt die Richtung des Gasstromes 8 an.

Anstelle einer Zweifachverglasung können auch Mehrfachverglasungen, beispielsweise eine Dreifachverglasung, verwendet werden.

In der Gasversorgungseinrichtung 4 wird Wasserstoff und Sauerstoff aus einem wasserhaltigen Elektrolyten in einer Elektrolyseeinrichtung erzeugt. Dem Gasstrom 8, der in dem geschlossenen Kreislauf 6 unter Verwendung der Pumpe 5 umgepumpt wird, wird Wasserstoff oder Sauerstoff zugeführt. Der Gasstrom wird zumindest während eines Schaltvorganges durch die Pumpe in dem geschlossenen Kreislaufsystem umgepumpt bzw. umgewälzt. Feuchtigkeit oder Wasser, die in den Zwischenraum 3 des Fensters (Verglasungselement 2) gegebenenfalls durch Undichtigkeiten in das System eingedrungen ist oder durch den Schaltvorgang in den Zwischenraum 3 gelangt ist, wird durch den Gasstrom 8 über den geschlossenen Kreislauf 6 zu der Gasversorgungsvorrichtung 4 überführt. Die Zusätze im Elektrolyten der Elektrolyseeinrichtung in der Gasversorgungsvorrichtung 4 bewirken, daß das in dem Gasstrom 8 mitgeführte Wasser bzw. die mitgeführte Feuchtigkeit von dem Elektrolyten aufgenommen wird.

Zur Vermeidung einer Kondensation ist es von Vorteil, wenn die Temperatur der Gasversorgungsvorrichtung 4 niedriger, gleich oder nicht wesentlich über der Temperatur des Fensters (Verglasungselement 2) liegt.

Bevorzugt steht die Gasversorgungsvorrichtung 4 oder die Elektrolyseeinrichtung in thermischem Kontakt mit dem Fenster (Verglasungselement 2), bzw. mit der Außentemperatur, die beispielsweise eine Gebäudefassade aufweist, damit die relative Luftfeuchtigkeit in der Gasversorgungsvorrichtung 4 der des Fensters 2 entspricht. Anderenfalls besteht die Möglichkeit, daß die Gasversorgungsvorrichtung 4 eine höhere Temperatur aufweist als das Fenster (Verglasungselement 2). In diesem Fall kann es dazu kommen, daß die relative Luftfeuchigkeit in der Gasversorgungsvorrichtung 4 deutlich unter 100 % liegt, die relative Luftfeuchtigkeit in dem Fenster (Verglasungselement 2) aufgrund der niedrigeren Fenstertemperatur hingegen 100 % erreichen kann, was zu einer Kondensation von Wasser in dem Fenster (Verglasungselement 2) führen kann.

In Abb. 1 ist die Pumpe 5 zwischen dem Fenster (Verglasungselement 2) und der Gasversorgungsvorrichtung 4 angeordnet.

Die Pumpe 5 kann selbstverständlich auch zwischen Gasversorgungsvorrichtung 4 und dem Fenster (Verglasungselement 2) angeordnet sein.

Über die Regelungseinheit 7 kann die Gasversorgungsvorrichtung 4 und die Pumpe 5 gesteuert werden. Die Eingangsgröße für die Regelungseinheit 7 kann ein Meßsignal eines physikalischen Parameters des Fensters sein. Der am Fenster gemessene physikalische Parameter kann beispielsweise der elektrische Widerstand der gasochromen Schicht, die Transmission oder Reflexion des Fensters (Verglasungselement 2), die Temperatur im Zwischenraum 3 des Fensters (Verglasungselement 2), die Außentemperatur, die Innentemperatur, die Bestrahlungsstärke im Zwischenraum 3 oder außerhalb des Fensters (Verglasungselement 2), der Feuchtigkeitsgehalt der Gasatmosphäre in dem Fenster (Verglasungselement 2), etc. sowie Kombinationen dieser Parameter sein. Die Parameter können vor (z.B. Außenseite eines Gebäudes, Fahrzeuges, etc.), in und/oder hinter (z.B. Innenseite eines Gebäudes, Fahrzeuges, etc.) dem Fenster (Verglasungselement 2) ermittelt werden.

Für die Erfassung des bzw. der physikalischen Parameter(n) an dem oder in dem Verglasungselement 2 können herkömmliche Sensoren verwendet werden. Die Ausgangswerte der Sensoren werden dann der Regelungseinheit 7 zugeführt und dort beispielsweise unter Verwendung eines Mikroprozessors verarbeitet. Beispielsweise können für die Erfassung der Temperatur Thermoelemente, Temperatursensoren, etc. verwendet werden. Für die Bestimmung der Einfärbung bzw. Entfärbung, d.h. Änderung der Transmission und/oder Reflexion, der gasochromen Schicht können optische Sensoren verwendet werden. Die elektrische Leitfähigkeit kann beispielsweise über eine herkömmliche Widerstandsmessung bestimmt werden.

Ergänzend oder alternativ können ein oder mehr Sensorelemente in den Gaskreislauf und/oder das Gasversorgungssystem zur Detektion der Gaszusammensetzung__ integriert werden. Diese können z. B. die Konzentration am vorbeiströmenden Gas erfassen.

Für die Gasversorgungsvorrichtung 4 kann eine Stromregelung mit Spannungsbegrenzung oder eine Spannungsregelung oder ein Durchlauf eines zeitlichen Profils mit kontinuierlichem Anstieg des Stromes oder der Spannung bei Beginn des Schaltvorgangs mit oder ohne Berücksichtigung der Meßsignale gewählt werden. Für die Ansteuerung der Pumpe 5 kann eine Vor- und/oder Nachlaufzeit definiert sein, während der vor Beginn und/oder nach Ende der Gaserzeugung in der Gasversorgungsvorrichtung 4 das Gas 8 umgepumpt bzw. umgewälzt wird.

In dem Zwischenraum 3 des Fensters (Verglasungselement 2) können weitere Trocknungselemente, die geeignet sind, die Gasfeuchtigkeit zu beeinflussen bzw. abzupuffern, angeordnet sein. Diese Trocknungselemente, beispielsweise chemische Trocknungsmittel, können im Rahmen oder an beliebigen Stellen, bevorzugt im Randbereich, des Zwischenraums 3 des Fensters (Verglasungselement 2) angeordnet sein. Die Verwendung von zusätzlichen Trocknungsmitteln bewirkt, daß das Gas weniger oft zur Trocknung durch die Gasversorgungsvoreinrichtung 4 bzw. durch die Elektrolyseeinrichtung geführt bzw. gepumpt werden muß. Bevorzugt werden als Trocknungsmittel solche verwendet, die das aufgenommene Wasser bzw. die aufgenommene Feuchtigkeit bei Betriebsbedingungen wieder abgeben. Selbstverständlich können diese zusätzlichen Trocknungselemente auch außerhalb des Zwischenraums 3 des Fensters (Verglasungselement 2), beispielsweise in dem geschlossenen Kreislauf 6, angeordnet sein. Eine Anordnung des Trocknungsmittels außerhalb des Fensters (Verglasungselement 2) ermöglicht einen, sofern erforderlich, vereinfachten Austausch, wenn das Trocknungsmittel beispielsweise in Form einer Patrone im äußeren Kreislauf 6 angeordnet ist.

Wie aus Fig. 1 hervorgeht, kann das erfindungsgemäße System äußerst vorteilhaft ohne Ventile betrieben werden. Dies ist insbesondere im Hinblick auf die langen Gebrauchszeiten, beispielsweise etwa 25 Jahre im Gebäudesektor bzw. etwa 10 Jahre im Automobilbereich, von sehr großem Vorteil.

Ein Ausfall des Systems durch defekte Ventile kann bei dieser Ausführungsform nicht auftreten. Der Schaltvorgang wird durch Starten der Gaserzeugung (Sauerstoff bzw. Wasserstoff) in der Elektrolyseeinrichtung in der Gasversorgungsvorrichtung 4 eingeleitet.

Durch Umpolen der Elektrolyseeinrichtung in der Gasversorgungsvorrichtung 4 wird an der mit dem Kreislauf 6 verbundenen Elektrode, die hier als Arbeitselektrode bezeichnet ist, Wasserstoff oder Sauerstoff erzeugt und in den Kreislauf 6 eingebracht. Das Einbringen von Wasserstoff oder Sauerstoff führt dann zu einem Einfärben bzw. Entfärben des gasochromen Fensters (Verglasungselement 2). Durch ein Umpolen der Elektrolyseeinrichtung in der Gäsversorgungsvorrichtung 4 bzw. der mit dem Kreislauf 6 verbundenen Elektrode wird dann beispielsweise anstelle von Wasserstoff Sauerstoff erzeugt und somit eine Umkehrung des Färbevorgangs des gasochromen Fensters (Verglasungselement 2) eingeleitet.

Selbstverständlich ist es auch möglich, in dem erfindungsgemäßen System Ventile zu verwenden. In diesem Fall kann das auf der Gegenelektrodenseite der Elektrolyseeinrichtung jeweils erzeugte Gas mit- bzw. weiterverwendet werden. In diesem Fall kann dann das in der Gegenelektrode erzeugte Gas in einem Gasspeicher bis zum nächsten Schaltvorgang gespeichert werden.

Das erfindungsgemäße System erlaubt äußerst vorteilhaft eine modulare Anpassung der Gasversorgungsvorrichtung im Hinblick auf die Erfordernisse von Gasmenge und Gaserzeugungsrate. In der Gasversorgungsvorrichtung können mehrere Elektrolyseeinrichtungen in Reihe oder aber auch parallel miteinander verbunden sein. Somit steht ein flexibles System bereit, bei dem in Abhängigkeit von den äußeren Erfordernissen, beispielsweise von der Anzahl zu regelnden gasochromen Fenstern (Verglasungselement 2) entsprechend Elektrolyseeinrichtungen zugeschaltet werden können. Die Stromversorgung der Gasversorgungsvorrichtungen 4 kann ebenfalls über eine Serien- oder Parallelschaltung erfolgen.

Das erfindungsgemäße System 1 kann weiterhin einen Inertgasspeicher, beispielsweise in der Form einer auswechselbaren Gaskartusche, umfassen. Dieser Inertgasspeicher, der in Fig. 1 nicht dargestellt ist, kann an jeder geeigneten Stelle in dem Kreislaufsystem angeordnet sein. Selbstverständlich kann die Konzentration des Inertgases in der Gasmischung, beispielsweise durch Gassensoren, geeignet gemessen und der Meßwert an die Regelungseinheit 7 übermittelt werden. Über die Regelungseinheit 7 kann dann die Zuführung von weiterem Inertgas aus dem Inertgasspeicher zu der Gasmischung in dem Gaskreislauf im erfindungsgemäßen System 1 geregelt werden.

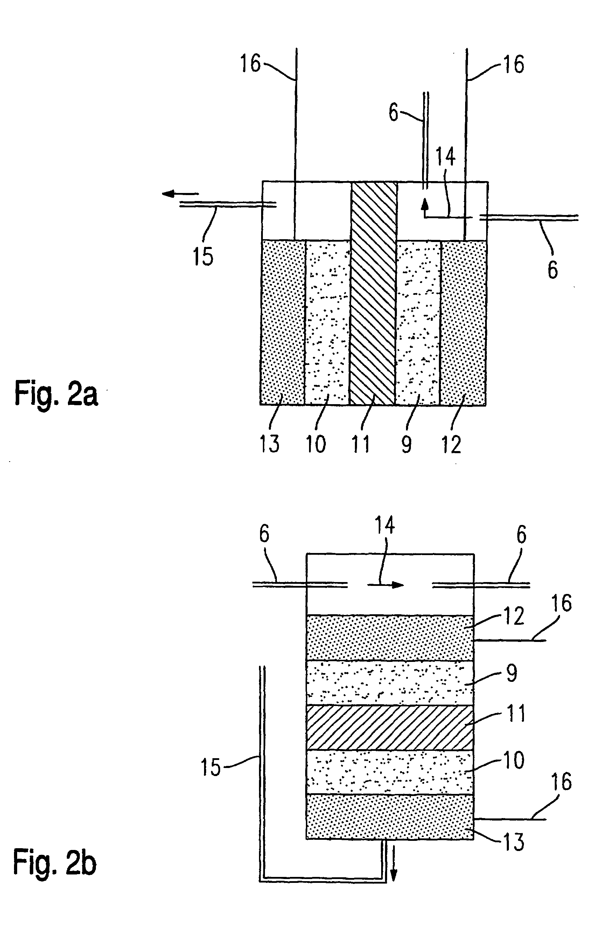

Fig. 2a zeigt einen beispielhaften Aufbau einer Elektrolyseeinrichtung 4, die in dem erfindungsgemäßen System 1 verwendet werden kann.

Die Elektrolyseeinrichtung 4 umfaßt Elektroden 9 und 10, die durch eine Membran 11 voneinander getrennt sind. Auf den Elektroden 9 und 10 sind Stromzuführungen 12 bzw. 13 angeordnet. Die Stromzuführungen 12 und 13 sind über die elektrisch leitfähige Verbindungen 16 mit einer Spannungsversorgung (nicht gezeigt) verbunden.

Die Elektrode 9 ist in dem Kreislauf 6, der in dieser Figur nicht gezeigt ist, angeordnet. Das an der Elektrode 9 (Arbeitselektrode) entstehende Gas, beispielsweise Wasserstoff oder Sauerstoff tritt in den Gasstrom 14 über, der in dem geschlossenen Kreislauf 6 durch das erfindungsgemäße System zirkuliert werden kann. Das an der Gegenelektrode 10 erzeugte Gas kann über den Gasauslaß 15 an die Umgebung abgegeben oder aber auch gespeichert werden. Die Elektroden 9 bzw. 10, werden hier auch als katalytische Elektroden bezeichnet, da bei bevorzugten Ausgestaltungsformen deren Materialien so gewählt sind, daß an deren Oberfläche die Gaserzeugung bzw. die Redoxreaktion bevorzugt stattfindet. Die Elektroden können beispielsweise Palladium, Platin, Iridium, Osmium, Rhodium, Rhenium, Ruthenium, Nickel oder Mischungen aus diesen Metallen, enthalten oder daraus hergestellt sein. Vorzugsweise weist die Elektrode eine poröse Beschaffenheit auf.

Die Stromzuführungen 12 und 13 sind für eine verbesserte elektrische Stromleitung an den Elektroden 9 bzw. 10 angeordnet. Die Stromzuführungen können beispielsweise Ruthenium, Rhodium, Palladium, Silber, Rhenium, Osmium, Iridium, Platin, Gold, Nickel, Titan, Kohlenstoff, Edelstahl oder Mischungen davon enthalten bzw. daraus hergestellt sein oder aus einem unedleren Metall mit einer Schutzschicht aus einem edleren Metall, beispielsweise Ruthenium, Rhodium, Palladium, Silber, Rhenium, Osmium, Iridium, Platin, Gold, oder elektrisch leitenden Metalloxiden, wie beispielsweise dotiertem Wolframoxid, Zinnoxid, Zinkoxid, Indiumoxid oder Mischungen davon versehen sein, hergestellt sein.

Die Stromzuführungen 12 und 13 können bereits ausreichende katalytische Eigenschaften aufweisen. Die katalytischen Elektroden 9 und 10 können beispielsweise auch eine ausreichende elektrische Leitfähigkeit aufweisen. Dann können die Stromzuführungen durch die Elektroden bzw. die Elektroden durch die Stromzuführungen ersetzt sein, d.h. entweder die Stromzuführungen oder die Elektroden können weggelassen werden.

Die Membran 11 ist das trennende Element zwischen den Elektroden 9 und 10. Die Membran 11 kann beispielsweise eine Ionen leitende, beispielsweise eine Protonen leitende, Polymerfolie sein, wie beispielsweise Nafion® der Firma Du Pont, Bad Homburg, Deutschland. Die Membran 11 kann aber auch ein poröser Festkörper, der mit Elektrolyt gefüllt ist, sein. Die Elektrolyseeinrichtung in der Gasversorgungsvorrichtung 4 kann beispielsweise so aufgebaut sein, daß die Elektroden 9 und 10 unmittelbar auf der Membran 11 aufgebracht sind. Weiterhin können die Stromzuführungen 12 und 13 unmittelbar auf den Elektroden 9 bzw. 10 aufgebracht sein.

Zum Abtransport des erzeugten Wasserstoff- oder Sauerstoffgases sind in diesem Fall Gaskanäle vorgesehen. Beispielsweise können zwischen der Stromzuführung 12 und der Elektrode 9 Gaskanäle vorgesehen sein. Diese Kanäle zum Abführen des erzeugten Gases (Gaskanäle) sind in Fig. 2a nicht gezeigt. Neben der Membran 11 können dann diese Gaskanäle mit Elektrolyt gefüllt sein. Die nicht dargestellten Gaskanäle können aber auch überwiegend mit Gas, d.h. nicht mit Elektrolyt gefüllt sein. In letzterem Fall wäre dann nur die Membran 11 mit Elektrolyt gefüllt.

Fig. 2b zeigt eine beispielhafte Ausführungsform, bei der die Elektrolyseeinrichtung in liegender Form ausgeführt ist. Die Bezugszeichen entsprechen denen aus Fig. 2a. Der in der Elektrode 9 entstehende Wasserstoff bzw. Sauerstoff wird dem Gasstrom 14, der in dem geschlossenen Kreislauf 6 zirkuliert werden kann, zugeführt. Das an der Gegenelektrode 10 entstehende Gas kann über den Gasauslaß 15, beispielsweise zur Abgabe an die Umgebung oder zur Speicherung in einem Speicherelement, abgeführt werden. Mit Ausnahme der verkürzten Membran 11 entspricht diese Darstellung der Darstellung auf Fig. 2a.

Fig. 3 stellt eine weitere Ausführungsform der Elektrolyseeinrichtung in stehender Form dar. Bei dieser Ausführungsform sind die Elektroden 9 und 10 jeweils auf den Stromzuführungen 12 bzw. 13 aufgebracht. Im Unterschied zu Fig. 2a und 2b sind die Elektroden 9 bzw. 10 nicht auf der Membran 11 aufgebracht. Der zwischen den Elektroden 9 und 10 sich über die Membran 11 erstreckende Zwischenraum ist zumindest teilweise mit einem Elektrolyten 17 befüllt. Die Membran 11 dient der Trennung des an den Elektroden 9 und 10 entstehenden Wasserstoff- bzw. Sauerstoffgases. Im übrigen entspricht die Darstellung der Darstellung aus Fig. 2a.

Bei einer weiteren nicht gezeigten Ausführungsform der vorliegenden Erfindung weist die Elektrolyseeinrichtung keinen Gasauslaß 15 auf der Gegenelektrodenseite, wie in den Fig. 2a, 2b und 3 dargestellt, auf. Hier erfolgt eine gezielte Rückreaktion von Wasserstoff und Sauerstoff auf der Gegenelektrodenseite zu Wasser. Diese Rückreaktion kann durch die (katalytische) Gegenelektrode alleine oder durch zusätzliche Katalysatoren beschleunigt werden.

Alternativ ist die Rückreaktion auch durch Zugabe eines Salzes oder eines Feststoffes oder einer Flüssigkeit in den Elektrolyten auf der Gegenelektrodenseite, welches/welcher/welche dann bei Anlegung einer Spannung einer Redoxreaktion unterworfen wird, so daß die Redoxreaktion anstelle einer Gaserzeugung erfolgt, möglich. Hierdurch wird zum einen die Gaserzeugung von Wasserstoff oder Sauerstoff auf der Gegenelektrodenseite vermieden und andererseits wird die nötige Spannungsdifferenz zwischen den Elektroden verringert, da nunmehr nur die Spannungsdifferenz von der Gaserzeugungsreaktion von Wasserstoff (bzw. Sauerstoff) auf der Arbeitselektrodenseite zum Redoxpotential der Salzredoxreaktion auf der Gegenelektrodenseite, beispielsweise (Fe²⁺/Fe³⁺), und nicht zur Gaserzeugung von Sauerstoff oder Wasserstoff auf der Gegenelektrodenseite erbracht werden muß. Diese Spannungsdifferenz ist bei geeigneten Redoxpaaren, wie beispielsweise Fe²⁺/Fe³⁺, geringer als die Spannungsdifferenz zwischen Wasserstoff und Sauerstoff. Beispiele solcher Salze sind Salze mit Eisen-, Mangan-, Zinn-, Wolfram-, Molybdän-, Quecksilber-, Silber-, Jod-, Kupfer-, Brom-, Chlor- und Wismutionen oder deren Oxide oder deren Komplexe sowie Mischungen davon.

Gemäß einer weiteren bevorzugten Ausführungsform sind im Elektrolyt auf der Gegenelektrodenseite Feststoffe, die Fe-, Mn-, Sn-, W-, Mo-, Hg-, Ag-, J-, Cu-, Br-, Cl-, Bi-, Co-, Ti-, Cr-, Ni-, V-Ionen oder deren Oxide oder deren Komplexe oder Mischungen davon umfassen, enthalten.

Weiterhin ist bevorzugt, daß im Elektrolyt auf der Gegenelektrodenseite Gase, wie Wasserstoff, Sauerstoff, Chlor, Brom, Jod oder Mischungen davon umfassen, enthalten sind.

Es ist aber auch möglich, einen gasförmigen Stoff zu verwenden, beispielsweise Wasserstoff oder Sauerstoff, der bei der Polung der Elektrolyseeinrichtung in der Gasversorgungsvorrichtung 4 auf der Gegenelektrodenseite gebildet wird, dann bei einer Umpolung wieder verbraucht wird und die Gasbildung auf der Arbeitselektrodenseite thermodynamisch antreibt und so eine geringere Spannung ermöglicht.

Beispielsweise ist es möglich, Wasserstoffgas auf der Gegenelektrodenseite zu bilden, welches in Form von Protonen durch die Membran 11 gelangt, wobei die Elektronen über die Spannungsversorgung zurück auf die Arbeitselektrode fließen. An der Arbeitselektrode werden die Protonen wieder zu Wasserstoff reduziert. Dies stellt ein gasförmiges Analogon zu einem auf der Gegenelektrodenseite gelöstem Salz-Redoxpaar dar.

Auch Feststoffe sind als Speicherelement auf der Gegenelektrodenseite möglich. Beispielsweise kann festes Wolframoxid, bevorzugt in poröser Form, wobei die Poren von flüssigem Elektrolyt durchdrungen sind, auf die Gegenelektrodenseite aufgebracht werden. Bei der Erzeugung von Sauerstoff auf der Arbeitselektrodenseite werden Protonen und Elektronen in das Wolframoxid eingelagert. Beim Umpolen verlassen die Protonen das Wolframoxid, durchwandern die Membran und bilden Wasserstoffgas auf der Arbeitselektrodenseite. Weitere verwendbare Materialien sind Übergangsmetalloxide wie z.B. die Oxide von Mo, Ti, V, Cr, Mn, Co, Ni, Ce oder Mischungen (Mischoxide) davon.

## Patentansprüche

1. System zum steuern des Lichttransmission (1) mit einem Verglasungselement (2) und einer Gasversorgungsvorrichtung (4),
wobei
das Verglasungselement (2) wenigstens zwei einen Zwischenraum (3) einschließende Substrate (18, 19) und wenigstens ein in dem Zwischenraum (3) angeordnetes Gas mit definierter Zusammensetzung umfaßt, wobei wenigstens auf einer der dem Zwischenraum (3) zugewandten Flächen eines Substrates (18, 19) eine Beschichtung, deren physikalische Eigenschaften, insbesondere optische und/oder elektrische Eigenschaften, in Abhängigkeit von der Zusammensetzung des Gases änderbar sind, aufgebracht ist,
das Verglasungselement (2) und die Gasversorgungsvorrichtung (4) so miteinander verbunden sind, daß das Gas in einem geschlossenen Kreislauf (6) zwischen Verglasungselement (2) und Gasversorgungsvorrichtung (4) führbar ist, und
in dem System Mittel zur Beeinflussung des Feuchtigkeitsgehaltes des Gases angeordnet sind,
dadurch gekenzeichnet daß die Gasversorgungsvorrichtung (4) wenigstens eine Elektrolyseeinrichtung, enthält die eine Arbeitselektrode (9), eine Gegenelektrode (10) und wenigstens einen Elektrolyten (17) zur Erzeugung von Gas umfaßt.

2. System nach Anspruch 1,
**dadurch gekennzeichnet,**
**daß** die Beschichtung wenigstens eine elektrochrome Schicht umfaßt.

3. System nach Anspruch 2,
**dadurch gekennzeichnet,**
**daß** die wenigstens eine elektrochrome Schicht Oxide von Übergangsmetallen, insbesondere Wolframoxid, Molybdänoxid, Titanoxid, Chromoxid, Vanadiumoxid, Ceroxid, Iridiumoxid, Manganoxid, Kobaltoxid, Nioboxid, Nickeloxid und/oder Mischungen oder Verbindungen davon, und/oder elektrochrome Polymere umfaßt.

4. System nach Anspruch 1,
**dadurch gekennzeichnet,**
**daß** die Beschichtung wenigstens eine Schicht, die schaltbare Metallhydride enthält, umfaßt.

5. System nach Anspruch 4,
**dadurch gekennzeichnet,**
**daß** die Schicht, die schaltbare Metallhydride enthält, seltene Erden und/oder Übergangsmetalloxide umfaßt.

6. System nach Anspruch 4 oder 5,
**dadurch gekennzeichnet,**
**daß** die schaltbaren Metallhydride aus der Gruppe, die aus La_{1-z}Mg_{z}Hₓ, YHₓ, ZaHₓ, Gd_{1-Z}Mg_{z}Hₓ, NiMg_{Z}Hₓ, CoMg_{Z}Hₓ, SmHₓ, Y_{1-z}Mg_{z}Hₓ, und Mischungen davon besteht, ausgewählt werden.

7. System nach einem der vorhergehenden Ansprüche,
**dadurch gekennzeichnet**
**daß** die Beschichtung Katalysatoren als Beimengung und/oder als separate Schicht umfaßt.

8. System nach Anspruch 7,
**dadurch gekennzeichnet,**
**daß** die Katalysatoren Bestandteile aus der Gruppe, die aus Pt, Ir, Pd, Rh, Os, Re, Ni, Ru und Mischungen davon besteht, enthalten.

9. System nach einem der vorhergehenden Ansprüche,
**dadurch gekennzeichnet**
**daß** die Erzeugung von Gas mit einer Gaserzeugungsrate erfolgt, die in einem Bereich von 10 ml/min bis 500 ml/min, bevorzugt 20 ml/min bis 200 ml/min, liegt.

10. System nach einem der vorhergehenden Ansprüche,
**dadurch gekennzeichnet**
**daß** das in der Gasversorgungseinrichtung (4) erzeugbare Gas mit Inertgas, bevorzugt Stickstoff, Helium, Neon, Argon, Krypton, Xenon oder Mischungen davon, verdünnt werden kann.

11. System nach Anspruch 10,
**dadurch gekennzeichnet,**
**daß** die Konzentration des in der Gasversorgungseinrichtung (4) erzeugbaren Gases durch Zuführung von Inertgas auf unter 5 %, bevorzugt unter 3 %, bezogen auf das Gesamtvolumen der Gasmischung, einstellbar ist.

12. System nach einem der vorhergehenden Ansprüche,
**dadurch gekennzeichnet,**
**daß** die Elektrolyseeinrichtung Wasserstoff und Sauerstoff aus einem wasserhaltigen Elektrolyten (17) erzeugt, wobei der Wasserstoff und/oder Sauerstoff in das Verglasungselement (2) überführbar ist.

13. System nach einem der vorhergehenden Ansprüche,
**dadurch gekennzeichnet,**
**daß** die Elektrolyseeinrichtung umpolbar ist.

14. System nach einem der vorhergehenden Ansprüche,
**dadurch gekennzeichnet,**
**daß** in dem Verglasungselement (2) vorhandene oder entstehende Feuchtigkeit in den Elektrolyt (17) der Elektrolyseeinrichtung überführbar ist.

15. System nach einem der vorhergehenden Ansprüche,
**dadurch gekennzeichnet,**
**daß** das System ohne Ventile betreibbar ist.

16. System nach einem der vorhergehenden Ansprüche,
**dadurch gekennzeichnet,**
**daß** die Mittel zur Beeinflussung des Feuchtigkeitsgehaltes des Gases in der Gasversorgungsvorrichtung (4) angeordnet sind.

17. System nach einem der vorhergehenden Ansprüche,
**dadurch gekennzeichnet,**
**daß** der Elektrolyt (17) wenigstens einen Zusatz, der dem Gas Feuchtigkeit entzieht, enthält.

18. System nach Anspruch 17,
**dadurch gekennzeichnet,**
**daß** der Zusatz aus der Gruppe ausgewählt wird, die aus Säuren, Laugen, Salze und Mischungen davon besteht.

19. System nach Anspruch 18,
**dadurch gekennzeichnet,**
**daß** der Zusatz aus der Gruppe ausgewählt wird, die aus Salzsäure, Schwefelsäure, Phosphorsäure, NaCl, K₃PO₄, NaOH, KOH und Mischungen davon besteht.

20. System nach einem der vorhergehenden Ansprüche,
**dadurch gekennzeichnet,**
**daß** in dem System (4) wenigstens ein Mittel zur Erzeugung eines gerichteten Gasstromes (8, 14) in dem geschlossenen Kreislauf (6), bevorzugt eine Pumpe (5), angeordnet ist.

21. System nach einem der vorhergehenden Ansprüche,
**dadurch gekennzeichnet,**
**daß** die Elektroden (9, 10) der Elektrolyseeinrichtung unmittelbar auf einer Membran (11) aufgebracht sind.

22. System nach Anspruch 21,
**dadurch gekennzeichnet,**
**daß** die Membran (11) eine ionenleitende Kunststoffolie oder einen mit Elektrolyt (17) gefüllten porösen Feststoff umfaßt.

23. System nach einem der vorhergehenden Ansprüche,
**dadurch gekennzeichnet,**
**daß** die Elektroden (9, 10) Ru, Rh, Pd, Re, Os, Ir, Pt, Ni oder Mischungen davon enthalten.

24. System nach einem der vorhergehenden Ansprüche,
**dadurch gekennzeichnet,**
**daß** Stromzuführungen (12, 13) in der Elektrolyseeinrichtung, die unmittelbar auf den Elektroden (9, 10) aufgebracht sind, vorgesehen sind.

25. System nach Anspruch 24,
**dadurch gekennzeichnet,**
**daß** die Stromzuführungen (12, 13) Kanäle zur Führung von Gas aufweisen.

26. System nach Anspruch 25,
**dadurch gekennzeichnet,**
**daß** die Stromzuführungen (12, 13) Ti, C, Ni, Fe, Ru, Rh, Pd, Ag, Re, Os, Ir, Pt, Au, Ni oder Mischungen davon oder unedlere Metalle, die mit einer Schutzschicht aus Ru, Rh, Pd, Ag, Re, Os, Ir, Pt, Au, elektrisch leitenden Metalloxiden, insbesondere dotiertem Wolframoxid, Zinnoxid, Zinkoxid, Indiumoxid oder Mischungen davon, versehen sind, enthalten.

27. System nach einem der vorhergehenden Ansprüche,
**dadurch gekennzeichnet,**
**daß** der Elektrolyt (17) auf der Gegenelektrodenseite (10) zusätzliche Redoxpaare, die beim Anlegen einer Spannung an die Elektrolyseeinrichtung (4) einer Redoxreaktion unterliegen, enthält.

28. System nach Anspruch 27,
**dadurch gekennzeichnet,**
**daß** im Elektrolyt (17) auf der Gegenelektrodenseite (10) Salze, die Wasserstoff, Sauerstoff, Fe-, Mn-, Sn-, W-, Mo-, Hg-, Ag-, J-, Cu-, Br-, Cl-, Bi-Ionen oder deren Oxide oder deren Komplexe oder Mischungen davon umfassen, gelöst sind.

29. System nach Anspruch 27,
**dadurch gekennzeichnet,**
**daß** im Elektrolyt (17) auf der Gegenelektrodenseite (10) Feststoffe, die Fe-, Mn-, Sn-, W-, Mo-, Hg-, Ag-, J-, Cu-, Br-, Cl-, Bi-, Co-, Mn-, Ti-, Cr-, Ni-, V-Ionen oder deren Oxide oder deren Komplexe oder Mischungen davon umfassen, enthalten sind.

30. System nach Anspruch 27,
**dadurch gekennzeichnet,**
**daß** im Elektrolyt (17) auf der Gegenelektrodenseite (10) Gase, die Wasserstoff, Sauerstoff, Chlor, Brom, Jod oder Mischungen davon umfassen, enthalten sind.

31. System nach einem der vorhergehenden Ansprüche,
**dadurch gekennzeichnet,**
**daß** die Substrate (18, 19) aus Glas oder transparentem Polymermaterial hergestellt sind.

32. System nach einem der vorhergehenden Ansprüche,
**dadurch gekennzeichnet,**
**daß** die Gasversorgungsvorrichtung (4) mehrere Elektrolyseeinrichtungen, die in Reihe und/oder parallel miteinander verbunden sind, umfaßt.

33. System nach einem der vorhergehenden Ansprüche,
**dadurch gekennzeichnet,**
**daß** das System (1) Mittel zum Erfassen eines oder mehrerer physikalischen Parameters des Verglasungselements und eine Regelungseinheit (7) zum Auswerten des oder der erfaßten Parameter und Einstellen eines vorgegebenen Wertes des physikalischen Parameters umfaßt.

34. System nach einem der vorhergehenden Ansprüche,
**dadurch gekennzeichnet,**
**daß** das System (1) Mittel zum Erfassen eines oder mehrerer physikalischer Parameter eines im Gasversorgungssystem oder im Gaskreislauf integrierten Sensorelementes, insbesondere zur Detektion der Gaszusammensetzung, und eine Regelungseinheit, die diesen/diese Parameter bei der Regelung der Elektrolyseeinrichtung berücksichtigt, aufweist.

35. System nach einem der vorhergehenden Ansprüche,
**dadurch gekennzeichnet,**
**daß** das System Mittel zur Erfassung von physikalischen Parametern wie Temperatur, Bestrahlungsstärke, Feuchtigkeit, in und/oder an dem System, insbesondere auf der Innen- oder Außenseite des Verglasungselementes (2), und eine Regelungseinheit (7) zum Auswerten der erfaßten Parameter und Regelung des Systems aufweist.

36. System nach einem der vorhergehenden Ansprüche,
**dadurch gekennzeichnet,**
**daß** in dem System weitere Feuchtigkeit aufnehmende und/oder speichernde Elemente angeordnet sind.

## Claims

1. System (1) for the control of light transmission, having a glazing element (2) and a gas supply device (4), wherein
the glazing element (2) comprises at least two substrates (18, 19) which enclose a cavity (3) and at least one gas with a defined composition arranged in the cavity (3), wherein a coating whose physical properties, in particular optical and/or electrical properties, can be varied as a function of the composition of the gas is applied to at least one of the faces of a substrate (18, 19) which face the cavity (3),
the glazing element (2) and the gas supply device (4) are connected to each other so that the gas can be delivered in a closed circuit (6) between the glazing element (2) and the gas supply device (4), and
means for influencing the moisture content of the gas are arranged in the system,
**characterised in that**
the gas supply device (4) contains at least one electrolysis instrument, which comprises a working electrode (9), a back electrode (10) and at least one electrolyte (17) for the generation of gas.

2. System according to Claim 1,
**characterised in that**
the coating comprises at least one electrochromic layer.

3. System according to Claim 2,
**characterised in that**
the at least one electrochromic layer comprises oxides of transition metals, in particular tungsten oxide, molybdenum oxide, titanium oxide, chromium oxide, vanadium oxide, cerium oxide, iridium oxide, manganese oxide, cobalt oxide, niobium oxide, nickel oxide and/or mixtures or compounds thereof, and/or electrochromic polymers.

4. System according to Claim 1,
**characterised in that**
the coating comprises at least one layer which contains switchable metal hydrides.

5. System according to Claim 4,
**characterised in that**
the layer which contains switchable metal hydrides comprises rare earths and/or transition metal oxides.

6. System according to Claim 4 or 5,
**characterised in that**
the switchable metal hydrides are selected from the group which consists of La_{1-z}Mg_{z}Hₓ, YHₓ, LaHₓ, Gd_{1-z}Mg_{z}Hₓ; NiMg_{z}Hₓ, CoMg_{z}Hₓ, SmHₓ, Y_{1-z}Mg_{z}Hₓ and mixtures thereof.

7. System according to one of the preceding claims,
**characterised in that**
the coating comprises catalysts as admixtures and/or as a separate layer.

8. System according to Claim 7,
**characterised in that**
the catalysts contain components from the group which consists of Pt, Ir, Pd, Rh, Os, Re, Ni, Ru and mixtures thereof.

9. System according to one of the preceding claims,
**characterised in that**
the generation of gas is carried out with a gas at a generation rate which lies in a range of from 10 ml/min to 500 ml/min, preferably from 20 ml/min to 200 ml/min.

10. System according to one of the preceding claims,
**characterised in that**
the gas which can be produced in the gas supply instrument (4) can be diluted with an inert gas, preferably nitrogen, helium, neon, argon, krypton, xenon or mixtures thereof.

11. System according to Claim 10,
**characterised in that**
the concentration of the gas which can be produced in the gas supply instrument (4) can be adjusted to less than 5%, preferably less than 3%, expressed in terms of the total volume of the gas mixture, by supplying an inert gas.

12. System according to one of the preceding claims,
**characterised in that**
the electrolysis instrument generates hydrogen and oxygen from an electrolyte (17) containing water, and the hydrogen and/or oxygen can be transferred into the glazing element (2).

13. System according to one of the preceding claims,
**characterised in that**
the polarity of the electrolysis instrument is reversible.

14. System according to one of the preceding claims,
**characterised in that**
the moisture present or created in the glazing element (2) can be transferred into the electrolyte (17) of the electrolysis instrument.

15. System according to one of the preceding claims,
**characterised in that**
the system can be operated without valves.

16. System according to one of the preceding claims,
**characterised in that**
the means for influencing the moisture content of the gas are arranged in the gas supply device (4).

17. System according to one of the preceding claims,
**characterised in that**
the electrolyte (17) contains at least one additive which extracts moisture from the gas.

18. System according to Claim 17,
**characterised in that**
the additive is selected from the group which consists of acids, alkalis, salts and mixtures thereof.

19. System according to Claim 18,
**characterised in that**
the additive is selected from the group which consists of hydrochloric acid, sulphuric acid, phosphoric acid, NaCl, K₃PO₄, NaOH, KOH and mixtures thereof.

20. System according to one of the preceding claims,
**characterised in that**
at least one means for generating a directed gas flow (8, 14) in the closed circuit (6), preferably a pump (5), is arranged in the system (4).

21. System according to one of the preceding claims,
**characterised in that**
the electrodes (9, 10) of the electrolysis instrument are applied directly to a membrane (11).

22. System according to Claim 21,
**characterised in that**
the membrane (11) comprises an ion-conducting plastic film or a porous solid filled with electrolyte (17).

23. System according to one of the preceding claims,
**characterised in that**
the electrodes (9, 10) contain Ru, Rh, Pd, Re, Os, Ir, Pt, Ni or mixtures thereof.

24. System according to one of the preceding claims,
**characterised in that**
electrical leads (12, 13) are provided in the electrolysis instrument and are applied directly to the electrodes (9, 10).

25. System according to Claim 24,
**characterised in that**
the electrical leads (12, 13) have channels for the passage of gas.

26. System according to Claim 25,
**characterised in that**
the electrical leads (12, 13) contain Ti, C, Ni, Fe, Ru, Rh, Pd, Ag, Re, Os, Ir, Pt, Au, Ni or mixtures thereof, or baser metals which are provided with a protective layer of Ru, Rh, Pd, Ag, Re, Os, Ir, Pt, Au, electrically conducting metal oxides, in particular doped tungsten oxide, tin oxide, zinc oxide, indium oxide or mixtures thereof.

27. System according to one of the preceding claims,
**characterised in that**
the electrolyte (17) contains additional redox pairs on the back-electrode side (10), which experience a redox reaction when a voltage is applied to the electrolysis instrument (4).

28. System according to Claim 27,
**characterised in that**
salts which comprise hydrogen; oxygen, Fe, Mn, Sn, W, Mo, Hg, Ag, I, Cu, Br, Cl, Bi ions or their oxides or their complexes, or mixtures thereof, are dissolved in the electrolyte (17) on the back-electrode side (10).

29. System according to Claim 27,
**characterised in that**
solids which comprise Fe, Mn, Sn, W, Mo, Hg, Ag, I, Cu, Br, Cl, Bi, Co, Mn, Ti, Cr, Ni, V ions or their oxides or their complexes, or mixtures thereof, are contained in the electrolyte (17) on the back-electrode side (10).

30. System according to Claim 27,
**characterised in that**
gases which contain hydrogen, oxygen, chlorine, bromine, iodine, or mixtures thereof, are contained in the electrolyte (17) on the back-electrode side (10).

31. System according to one of the preceding claims,
**characterised in that**
the substrates (18, 19) are made of glass or a transparent polymeric material.

32. System according to one of the preceding claims,
**characterised in that**
the gas supply device (4) comprises a plurality of electrolysis instruments, which are connected together in series and/or parallel.

33. System according to one of the preceding claims,
**characterised in that**
the system (1) comprises means for recording one or more physical parameters of the glazing element, and a control unit (7) for evaluating the recorded parameter or parameters and adjusting a predetermined value of the physical parameter.

34. System according to one of the preceding claims,
**characterised in that**
the system (1) comprises means for recording one or more physical parameters of a sensor element integrated in the gas supply system or in the gas circuit, in particular for detecting the gas composition, and a control unit which takes this/these parameters into account when controlling the electrolysis instrument.

35. System according to one of the preceding claims,
**characterised in that**
the system (1) comprises means for recording physical parameters such as temperature, irradiance, moisture in and/or on the system, in particular on the inside or outside of the glazing element (2), and a control unit (7) for evaluating the recorded parameters and controlling the system.

36. System according to one of the preceding claims,
**characterised in that**
other elements which absorb and/or store moisture are arranged in the system.

## Revendications

1. Système de commande de transmission de lumière (1), comprenant un élément de vitrage (2) et un dispositif d'alimentation en gaz (4),
dans lequel
l'élément de vitrage (2) comprend au moins deux substrats (18, 19) renfermant un espace intermédiaire (3) et au moins un gaz ayant une composition définie disposé dans l'espace intermédiaire (3), un revêtement dont les propriétés physiques, notamment les propriétés optiques et/ou électriques, peuvent être modifiées en fonction de la composition du gaz étant déposé sur l'une au moins des surfaces d'un substrat (18, 19) dirigées vers l'espace intermédiaire (3),
l'élément de vitrage (2) et le dispositif d'alimentation en gaz (4) sont reliés l'un à l'autre de telle façon que le gaz peut être guidé en circuit fermé (6) entre l'élément de vitrage (2) et le dispositif d'alimentation en gaz (4), et
des moyens pour influer sur la teneur en humidité du gaz sont disposés dans le système,
**caractérisé en ce que** le dispositif d'alimentation en gaz (4) contient au moins un dispositif d'électrolyse qui comprend une électrode de travail (9), une contre-électrode (10) et au moins un électrolyte (17) pour produire du gaz.

2. Système selon la revendication 1, **caractérisé en ce que** le revêtement comprend au moins une couche électrochrome.

3. Système selon la revendication 2, **caractérisé en ce que** la au moins une couche électrochrome comprend des oxydes de métaux de transition, notamment de l'oxyde de tungstène, oxyde de molybdène, oxyde de titane, oxyde de chrome, oxyde de vanadium, oxyde de cérium, oxyde d'iridium, oxyde de manganèse, oxyde de cobalt, oxyde de niobium, oxyde de nickel et/ou des mélanges ou des composés de ceux-ci, et/ou des polymères électrochromes.

4. Système selon la revendication 1, **caractérisé en ce que** le revêtement comprend au moins une couche qui contient des hydrures métalliques commutables.

5. Système selon la revendication 4, **caractérisé en ce que** la couche contenant des hydrures métalliques commutables comprend des terres rares et/ou des oxydes de métaux de transition.

6. Système selon la revendication 4 ou 5, **caractérisé en ce que** les hydrures métalliques commutables sont choisis dans le groupe constitué par La_{1-z}Mg_{z}, Hₓ, YHₓ, LaHₓ, Gd_{1-z}Mg_{z}Hₓ, NiMg_{z}Hₓ CoMg_{z}Hₓ, SmHₓ, Y_{1-z}Mg_{z}Hₓ, ainsi que par des mélanges de ceux-ci.

7. Système selon l'une des revendications précédentes, **caractérisé en ce que** le revêtement comprend des catalyseurs en mélange et/ou sous forme de couche séparée.

8. Système selon la revendication 7, **caractérisé en ce que** les catalyseurs contiennent des constituants choisis dans le groupe constitué par Pt, Ir, Pd, Rh, Os, Re, Ni, Ru et des mélanges de ceux-ci.

9. Système selon l'une des revendications précédentes, **caractérisé en ce que** la production de gaz se fait à un débit de production de gaz qui se situe dans une plage allant de 10 ml/min à 500 ml/min, de préférence de 20 ml/min à 200 ml/min.

10. Système selon l'une des revendications précédentes, **caractérisé en ce que** le gaz qui peut être produit dans le dispositif d'alimentation en gaz (4) peut être dilué avec un gaz inerte, de préférence l'azote, l'hélium, le néon, l'argon, le krypton, le xénon ou des mélanges de ceux-ci.

11. Système selon la revendication 10, **caractérisé en ce que** la concentration du gaz qui peut être produit dans le dispositif d'alimentation en gaz (4) peut être ajustée par un apport de gaz inerte à moins de 5%, de préférence moins de 3%, ramenée au volume total du mélange de gaz.

12. Système selon l'une des revendications précédentes, **caractérisé en ce que** le dispositif d'électrolyse produit de l'hydrogène et de l'oxygène à partir d'un électrolyte contenant de l'eau (17), l'hydrogène et/ou l'oxygène pouvant être transférés dans l'élément de vitrage (2).

13. Système selon l'une des revendications précédentes, **caractérisé en ce que** la polarité du dispositif d'électrolyse est réversible.

14. Système selon l'une des revendications précédentes, **caractérisé en ce que** l'humidité présente ou produite dans l'élément de vitrage (2) peut être transférée dans l'électrolyte (17) du dispositif d'électrolyse.

15. Système selon l'une des revendications précédentes, **caractérisé en ce que** le système peut fonctionner sans valves.

16. Système selon l'une des revendications précédentes, **caractérisé en ce que** les moyens pour influer sur la teneur en humidité du gaz sont disposés dans le dispositif d'alimentation en gaz (4).

17. Système selon l'une des revendications précédentes, **caractérisé en ce que** l'électrolyte (17) contient au moins un additifqui retire de l'humidité du gaz.

18. Système selon la revendication 17, **caractérisé en ce que** l'additif est choisi dans le groupe constitué par des acides, des lessives alcalines, des sels et des mélanges de ceux-ci.

19. Système selon la revendication 18, **caractérisé en ce que** l'additif est choisi dans le groupe constitué par l'acide chlorhydrique, l'acide sulfurique, l'acide phosphorique, NaCl, K₃PO₄, NaOH, KOH et des mélanges de ceux-ci.

20. Système selon l'une des revendications précédentes, **caractérisé en ce qu'**au moins un moyen pour produire un flux de gaz dirigé (8, 14) dans le circuit fermé (6), de préférence une pompe (5), est disposé dans le système (4).

21. Système selon l'une des revendications précédentes, **caractérisé en ce que** les électrodes (9, 10) du dispositif d'électrolyse sont fixées directement sur une membrane (11).

22. Système selon la revendication 21, **caractérisé en ce que** la membrane (11) comprend une feuille de plastique conduisant les ions ou un solide poreux rempli d'électrolyte (17).

23. Système selon l'une des revendications précédentes, **caractérisé en ce que** les électrodes (9, 10) contiennent du Ru, Rh, Pd, Re, Os, Ir, Pt, Ni ou des mélanges de ceux-ci.

24. Système selon l'une des revendications précédentes, **caractérisé en ce qu'**il est prévu dans le dispositif d'électrolyse des alimentations en courant (12, 13) qui sont fixées directement sur les électrodes (9, 10).

25. Système selon la revendication 24, **caractérisé en ce que** les alimentations en courant (12, 13) présentent des canaux pour le guidage de gaz.

26. Système selon la revendication 25, **caractérisé en ce que** les alimentations en courant (12, 13) contiennent du Ti, C, Ni, Fe, Ru, Rh, Pd, Ag, Re, Os, Ir, Pt, Au, Ni ou des mélanges de ceux-ci, ou bien des métaux moins nobles dotés d'une couche de protection en Ru, Rh, Pd, Ag, Re, Os, Ir, Pt, Au, en oxyde métallique électriquement conducteur, notamment en oxyde de tungstène, oxyde d'étain, oxyde de zinc, oxyde d'indium dopé, ou des mélanges de ceux-ci.

27. Système selon l'une des revendications précédentes, **caractérisé en ce que**, du côté de la contre-électrode (10), l'électrolyte (17) contient des paires oxydoréductrices supplémentaires qui subissent une réaction d'oxydoréduction lorsqu'une tension est appliquée au dispositif d'électrolyse (4).

28. Système selon la revendication 27, **caractérisé en ce que**, du côté de la contre-électrode (10), des sels comprenant de l'hydrogène, de l'oxygène, des ions de Fe, Mn, Sn, W, Mo, Hg, Ag, I, Cu, Br, Ci, Bi ou leurs oxydes ou leurs complexes, ou des mélanges de ceux-ci, sont dissous dans l'électrolyte (17).

29. Système selon la revendication 27, **caractérisé en ce que**, du côté de la contre-électrode (10), des solides comprenant des ions de Fe, Mn, Sn, W, Mo, Hg, Ag, I, Cu, Br, Cl, Bi, Co, Mn, Ti, Cr, Ni, V ou leurs oxydes ou leurs complexes, ou des mélanges de ceux-ci, sont contenus dans l'électrolyte (17).

30. Système selon la revendication 27, **caractérisé en ce que**, du côté de la contre-électrode (10), des gaz comprenant de l'hydrogène, de l'oxygène, du chlore, du brome, de l'iode ou des mélanges de ceux-ci sont contenus dans l'électrolyte (17).

31. Système selon l'une des revendications précédentes, **caractérisé en ce que** les substrats (18, 19) sont réalisés en verre ou en un matériau polymère transparent.

32. Système selon l'une des revendications précédentes, **caractérisé en ce que** le dispositif d'alimentation en gaz (4) comprend plusieurs dispositifs d'électrolyse qui sont reliés les uns aux autres en série et/ou en parallèle.

33. Système selon l'une des revendications précédentes, **caractérisé en ce que** le système (1) comprend des moyens pour détecter un ou plusieurs paramètres physiques de l'élément de vitrage et un module de régulation (7) pour traiter le ou les paramètres détectés et fixer une valeur prédéterminée du paramètre physique.

34. Système selon l'une des revendications précédentes, **caractérisé en ce que** le système (1) présente des moyens pour détecter un ou plusieurs paramètres physiques d'un élément de capteur intégré dans le système d'alimentation en gaz ou dans le circuit de gaz, notamment pour détecter la composition du gaz, et un module de régulation qui tient compte de ce ou ces paramètres lors de la régulation du dispositif d'électrolyse.

35. Système selon l'une des revendications précédentes, **caractérisé en ce que** le système présente des moyens pour détecter des paramètres physiques tels que la température, l'intensité du rayonnement, l'humidité dans et/ou sur le système, notamment sur la face interne ou externe de l'élément de vitrage (2), et un module de régulation (7) pour traiter les paramètres détectés et réguler le système.

36. Système selon l'une des revendications précédentes, **caractérisé en ce que** d'autres éléments absorbant et/ou accumulant de l'humidité sont disposés dans le système.
